# EUROPEAN PATENT APPLICATION

(11) **EP 1 884 269 A2**
(43) Date of publication of application: **06.02.2008**
(21) Application number: 07014103.1
(22) Date of filing: 18.07.2007
(51) Int. Cl.: A63F 13/08

(54) **Swing device and control method for a swing device**

(30) Priority: 04.08.2006 JP 2006213982
(71) Applicant: SEGA CORPORATION, Tokyo 144-8531 (JP)
(72) Inventor: Higashiguchi, Motohiko, Ohta-ku Tokyo 144-8531 (JP)
(74) Representative: Schäfer, Matthias W.

(57) **Abstract**

To provide a swing device capable of making a user body-sense a rising, lowering, and/or turning feeling more impressively or with higher reality with a simple structure, there is provided a swing device including: a swing member (20) on which a user rides; a fulcrum support mechanism (30) for swingably supporting the swing member (20) at a fulcrum (32b); and a first driving mechanism (41a, 41b) for swingably supporting a first driving point (23a, 23b) on the swing member (20) and moving the first driving point (23a, 23b) in a vertical direction, the first driving point (23a, 23b) being spaced apart from the fulcrum (32b) in a longitudinal direction of the swing member (20), characterized in that the fulcrum (32b) is placed on a rear side of a riding position (24) of the user (O) in the longitudinal direction of the swing member (20).

## Description

### BACKGROUND OF THE INVENTION

### 1. Field of the Invention

The present invention relates to a swing device in which a swing member on which a user rides is allowed to swing to thereby make the user sense a rising or lowering feeling and the like, and a control method therefor. To be specific, the present invention relates to a swing device with which a user can body-sense a rising or lowering feeling that can be felt while a moving object such as an aircraft, a ship, a vehicle, or an animal is in a rising or lowering movement, and a control method therefor.

### 2. Description of the Related Art

Up to now, there is known a body-sensible swing game machine placed in an amusement facility such as a game arcade, in which a swing member on which a user rides is caused to swing according to an operation to an operation unit (see, for example, Japanese Utility Model Application Laid-open No. Hei 3-107993).

In this game machine, in order to make the user body-sense a attitude or a movement mode in a virtual space of a virtual moving object (e.g., fighter aircraft) whose moving mode in the virtual space is determined based on an operation by the user, there is employed a structure in which the swing member on which a seat, a steering rod, and the like are mounted is supported by a fulcrum placed on the front side of the seat and two driving points on the rear side of the seat, and the driving points are moved vertically, to thereby change a tilt angle of the swing member with respect to a horizontal plain.

That is, in a case where an operation is performed to raise the moving object, both of the driving points are moved downward to tilt the swing member in a direction in which the user faces upward, thereby the user can body-sense a rising feeling. In a case where an operation is performed to lower the moving object, both of the driving points are moved upward to tilt the swing member in a direction in which the user faces downward, thereby the user can body-sense a lowering feeling.

Further, in recent years, in order to make a user body-sense a rising or lowering feeling more impressively or with higher reality, there is realized a game machine in which the number of driving points of a swing member is increased or the degree of freedom of driving directions of driving points is increased. However, increasing the number of the drive points or the degree of freedom of driving directions inevitably leads to a problem of increased size or cost of the machine.

### SUMMARY OF THE INVENTION

The present invention has been made to solve the above-mentioned problem and therefore it is an object of the present invention to provide a swing machine which is able to make a user body-sense a rising or lowering and/or turning feeling more impressively or with higher reality with a simple structure

The present invention relates to a swing device including:
a swing member on which a user rides;
a fulcrum support mechanism for swingably supporting the swing member at a fulcrum; and
a first driving mechanism for swingably supporting the swing member at a first driving point thereof and driving the first driving point in a vertical direction (upward/downward direction), the first driving point being spaced apart from the fulcrum in a longitudinal direction (front/rear direction) of the swing member,
wherein the fulcrum is placed on a rear side of a riding position of the user in the longitudinal direction of the swing member (first aspect).

The inventors of the present invention have conducted extensive studies about the structures of the conventional game machines such as one disclosed in Japanese Utility Model Application Laid-open No. Hei 3-107993, and found the reason why it has been difficult to further enhance impression or heighten reality of the rising or lowering feeling, to thereby complete the present invention.

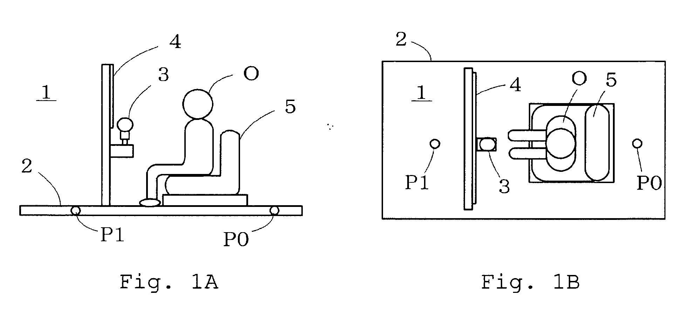

Hereinafter, the mechanism of the present invention will be described in comparison with the conventional structure described in Japanese Utility Model Application Laid-open No. Hei 3-107993, by way of an example of a game machine 1 a plan view and a side view of which are shown in FIGS. 1A and 1B,.

As shown in the figures, in the game machine 1, an operation portion 3, a display device 4 and a seat 5 on which a user O can sit are mounted on a swing member 2 swingably supported at two support points P0 and P1. Based on an operation with respect to the operation portion 3, a moving mode of a virtual moving object (e.g., fighter aircraft; hereinafter, sometimes simply referred to as moving object) in a virtual space is determined, and a video image of the moving object in the virtual space (or a video image of the virtual space drawn from a viewpoint of the moving object) is displayed on the display device 4.

Note that in a case where a rotation of the game machine 1 in a lateral direction (rotation about a line connecting the two support points P0 and P1) needs to be regulated or controlled, in addition to support mechanisms at the support points P0 and P1, it is necessary to provide auxiliary means such as guide means for maintaining the level of the swing member 2 in the lateral direction.

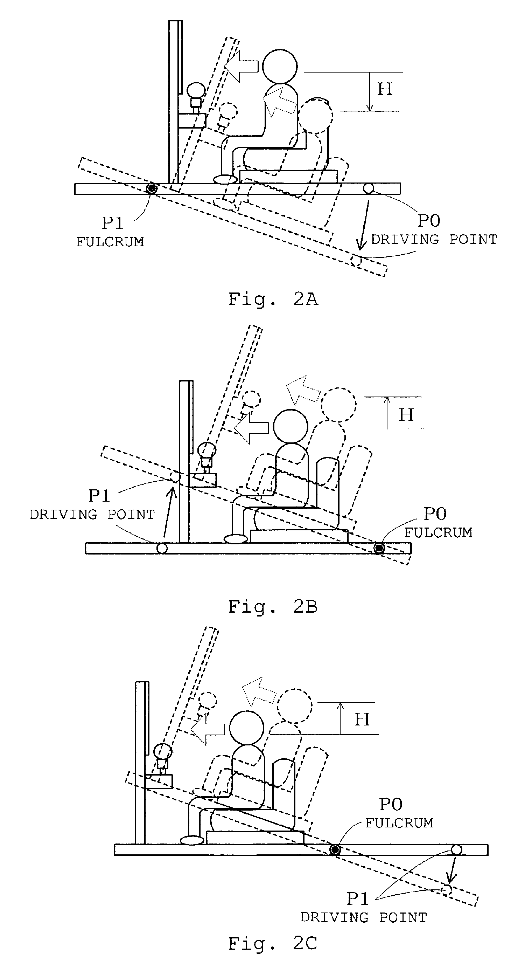

In the conventional structure, as shown in FIG. 2A, the support point P1 on a front side of a riding position of the user O serves as a fulcrum whose movement in a vertical direction is regulated, and the support point P0 on the rear side of the riding position of the user O serves as a driving point which is moved in the vertical direction.

Accordingly, in a case where an operation to raise the moving object is performed with respect to the operation portion 3, in order to make the user O sense a rising feeling, the driving point P0 is driven downward so as to tilt the swing member 2 in a direction in which the user faces upward as represented by a dotted line of FIG. 2A. In this case, the vertical position of the user O is lowered by an amount represented by reference symbol H. Thus, the user O senses a rising feeling because his/her body faces upward, and simultaneously senses a lowering feeling because his/her body is moved downward, which causes the result that the rising feeling, which is originally intended to be attained, is cancelled.

The similar situation also occurs in a case where an operation is performed so as to lower the moving object. In order to make the user O sense a lowering feeling, the driving point P0 is driven upward. Then, the swing member 2 tilts in a direction in which the user O faces downward, and at the same time, the vertical position of the user is heightened. Thus, the user senses a rising feeling as well as a lowering feeling, which causes the result that the lowering feeling, which is originally intended to be attained, is cancelled.

In the present invention, the above-mentioned problems are solved by a constitution, as shown in FIG. 2B, that the support point P0 on the rear side of the riding position of the user O serves as the fulcrum whose movement in the vertical direction is regulated, and the support point P1 apart from the fulcrum P0 in a longitudinal direction (forward direction in the example shown in FIG. 2B) serves as a first driving point which is moved in the vertical direction.

Accordingly, in a case where an operation to raise the moving object is performed with respect to the operation portion 3, the first driving point P1 on the front side is driven upward so as to tilt the swing member 2 in the direction in which the user O faces upward as represented by a dotted line of FIG. 2B. In this case, the vertical position of the user O is heightened by an amount represented by reference symbol H. Thus, the user senses a rising feeling because his/her body faces upward, and simultaneously senses another rising feeling because his/her body is moved upward, thereby the synergistic effect of which significantly enhances impression or reality of the rising feeling.

The similar situation also occurs in a case where the operation to lower the moving object is performed. The driving point P1 on the front side is driven downward to tilt the swing member 2 in the direction in which the user O faces downward. In this case, the vertical position of the user is lowered. Thus, the user senses a lowering feeling because his/her body faces downward, and simultaneously senses another lowering feeling because his/her body is moved downward, thereby a synergistic effect of which significantly enhances impression or reality of the lowering feeling.

The effects of the present invention is attained by changing the tilt angle of the swing member 2 by rotating the swing member 2 about the fulcrum P0 placed at the rear side of the riding position of the user O and therefore, the vertical movement of the fulcrum P0 needs to be regulated to a certain extent. However, note that a structure can also be employed in which the fulcrum P0 moves vertically by an amount in a range sufficiently small with respect to the vertical movement of the first driving point P1.

Likewise, it is sufficient if the first driving point P1 in the swing device of the present invention is spaced apart from the fulcrum P0 by a predetermined amount in the longitudinal direction. Therefore, even in a case where the first driving point P1 is placed on the rear side of the fulcrum P0 as shown in FIG. 2C, the effects of the present invention can also be attained by the mechanism similar to that explained with respect to FIG. 2B. Note that from a viewpoint of a space efficiency or the like, it is preferable that the first driving point P1 be placed on the front side of the fulcrum P0, especially on the front side of the riding position of the user as shown in FIG. 2B.

The swing device of the present invention can be used for the body-sensible game machine 1 with which the user steers the virtual moving object while enjoying such a feeling that the user actually rides on the moving object. In addition, the swing device of the present invention can also be used for a body-sensible video image appreciation device with which a user watches a video image from a viewpoint of a moving object with enjoying such a feeling that the user actually rides on the moving object. As such, the swing device of the present invention can be applied to arbitrary device which is intended to make a user body-sense a rising feeling, a lowering feeling, or the like.

The swing member of the present invention is necessary to have a strength and a size allowing the user to ride on, and a shape thereof may be a plate-like shape as shown in FIGS 1A, 1B and 2A to 2C. Alternatively, the shape may be a three-dimensional shape such as a shape of a fighter aircraft or a shape of a cockpit thereof.

The fulcrum support mechanism and the first driving mechanism of the present invention are necessary to be ones for swingably supporting the swing member. Examples of the support mechanism for swingably supporting the swing member include a universal joint and a ball joint.

An arbitrary mechanism capable of driving the first driving point P1 in a vertical direction, such as an oil hydraulic cylinder, can be employed as the first driving mechanism of the present invention. A linear actuator excellent in a driving length, driving velocity, driving force, and so on, is particularly preferably employed.

Note that, from a viewpoint of enhancing a transfer efficiency of the driving force, it is most preferable that, assuming a virtual sphere whose center corresponds to the fulcrum P0 and radius corresponds to a line segment connecting the fulcrum P0 and the first driving point P1, the driving force be applied in a tangential direction with respect to the sphere. However, in a case where a driving direction by the first driving mechanism is made always orthogonal to the line segment connecting the fulcrum P0 and the first driving point P1, the angle formed by a driving direction of the first driving mechanism and the above-mentioned line segment changes as the first driving point P1 moves on a surface of the sphere whose radius corresponds to the line segment. Therefore, a mechanism, such as a cylinder, which performs linear movement cannot constantly perform tangential movement to the sphere surface in reality.

Accordingly, in the case where the first driving mechanism is one for performing the linear movement, it is preferable that an operational direction of a supporting force by the first driving mechanism is orthogonal to the line connecting the fulcrum P0 and the first driving point P1 in a reference state (e.g., a state of starting or finishing a game in the embodiment to be described later, or a state where the moving object is in level flight in the virtual space).

In the present invention, the riding position refers to a position of the user on the swing member in the operational state, i.e. while the first driving point is driven by the first driving mechanism. For example, in the case of the structure in which the user sits on the seat on the swing member in the operational state, the riding position of the present invention corresponds to the position of the seat. Although, a case where the user sits on the seat is exemplified in this example, the seat is not always necessarily provided to realize the present application. For example, in a case where anti-drop means for preventing a user standing upright from dropping from the swing member is provided, the seat is not necessarily provided.

In the specification of the present invention, the terms indicating the directions of forward, backward, left, and right are used based on which direction the user faces in the operational state, that is, while the first driving point is driven by the first driving mechanism. The forward direction refers to the direction that the user faces, the backward direction refers to a reverse direction thereof, and the left and right directions indicate the directions orthogonal to the front and rear directions in the horizontal plane.

The present invention preferably relates to a swing device further including:
a second driving mechanism for swingably supporting the swing member at a second driving point thereof and driving the second driving point in a vertical direction independently from the first driving mechanism, the second driving point being spaced apart from the fulcrum in a longitudinal direction of the swing member, and being spaced apart from the first driving point in a lateral direction of the swing member (second aspect).

That is, in addition to the structure of the first aspect of the present invention, the second aspect of the present invention is characterized by including the second driving mechanism for driving the second driving point in the vertical direction, the second driving point spaced apart from the fulcrum in the longitudinal direction and spaced apart from the first drive means in the lateral direction.

Accordingly, in the second aspect of the present invention, by raising or lowering the first and second driving points simultaneously, similarly to the first aspect of the present invention, it is possible to make the user body-sense a rising/lowering feeling. In addition, by vertically driving the first and second driving points in a manner that the their heights are different to each other, it is also possible to make the user body-sense a turning feeling to the left or right of the virtual moving object moving in the virtual space, or a combined feeling of a turning feeling to the left or right and a rising/lowering feeling thereof.

In the present invention, it is preferable that the swing device further include:
a support shaft projecting between the first driving point and the second driving point; and
static determinate maintaining means having a guide hole defined therein through which the support shaft is rotatably inserted, for regulating movement of the support shaft in the lateral direction of the swing member, and guiding the support shaft in the vertical direction (third aspect).

In the third aspect of the present invention, a line connecting the fulcrum and the support shaft serves as an axial center of the swing member and the degree of freedom of the movement of the swing member is limited to the raising and lowering movement of the axial center along the guide hole and the rotational movement of the swing member about the axial center. Thus, it becomes possible to readily maintain static determinate of the swing member. It is particularly preferable that the support shaft be positioned such that the distances therefrom to the first and second driving points are the same.

In the present invention, it is preferable that the driving point is placed on a front side of the riding position of the user in the longitudinal direction of the swing member (fourth aspect).

That is, assuming that driving mechanisms of identical performances are used, the larger the distance between the fulcrum position and the driving points are, the lower power (lower torque) the movement can be performed with. However, since the fulcrum is placed on the rear side of the seat of the user in the first and second aspects of the present invention, comparing the cases where the driving points are spaced apart from the fulcrum in one of the front direction and the rear direction, the entire device can be made compact in the case the driving points are placed on the front side of the seat of the user.

In the present invention, it is preferable that the swing device further include:
an operation member for transmitting an operation signal according to an operation by the user; and
processing means for specifying a movement mode of a virtual moving object in a virtual space in response to the operation signal from the operation member, wherein:
   the first driving mechanism drives the first driving point according to the movement mode of the virtual moving object specified by the processing means (fifth aspect).

In the fifth aspect of the present invention, the user can recognize the movement mode of the moving object determined by the processing means based on the operation that the user performs by himself/herself. Accordingly, it is possible to make the user body-sense a rising, lowering or turning feeling, or the like with higher reality by activating the first driving mechanism according to the movement mode of the moving object, e.g., in the case where the moving object rises, the first driving point is driven so as to raise the front portion of the swing member, and in the case where the moving object lowers, the first driving point is driven so as to lower the front portion of the swing member.

In the present invention, it is preferable that the swing device further include:
a display device placed on a front side of the riding position of the user in the longitudinal direction of the swing member, for displaying one of a video image of a virtual moving object moving in a virtual space and a video image of a virtual space drawn from a virtual viewpoint moving in the virtual space,
wherein:
the first driving mechanism drives the first driving point according to a movement mode of one of the virtual moving object and the virtual viewpoint (sixth aspect).

In the sixth aspect of the present invention, the first driving mechanism is operated according to the movement mode of the moving object or the virtual viewpoint recognized by the user based on the video image displayed by the display device. Thus, it is possible to make the user body-sense a rising/lowering feeling or a turning feeling or the like with much higher reality.

In the sixth aspect of the present invention, the video movie can be a video image of a real moving object moving in a real space, a video image of a landscape, an animation video image or a video image created using computer graphics. In a case with the former video images, the first driving mechanism can be operated according to the movement mode of the real or virtual moving object or the real or virtual viewpoint (video camera) recorded in the recording means in advance. In a case with the latter video image, the movement mode of the virtual moving object or the virtual viewpoint can be determined based on data used for creating the computer graphics, and the first driving mechanism can be operated according to the determined movement mode.

The display device of the sixth aspect of the present invention may be mounted at a position in front of the riding position of the user on the swing member as shown in FIGS. 1A, 1B and 2A to 2C, or at a position in front of the swing member spaced apart therefrom. In the case where the display device is mounted on the swing member, a liquid crystal monitor, which is lighter in weight and has a higher resistance against vibration than other display devices such as a CRT, is preferably used.

In the present invention, each of the first and second driving mechanism is preferably placed orthogonal to a line connecting the fulcrum and the first and second driving points, respectively, while the swing member is placed at a reference position (seventh aspect).

That is, assuming spheres whose radii correspond to a line segments connecting the fulcrum and the first and second driving points, it is mechanically desirable that each of the first and second driving mechanisms be positioned in a tangential direction with respect to each of the spheres. However, in a case of actually positioning the first and second driving mechanism as described above, support stages of the first and second driving mechanisms are spaced apart from each other, with an disadvantageous result that a width of the entire game machine becomes larger. Thus, as described above, it is preferable that the first and second driving mechanisms of the present invention are positioned such that each the operational direction of the driving mechanisms is orthogonal to the line connecting the fulcrum P0 and the driving points P1 in a reference state of the swing member (e.g., a state where the swing member is placed at a standard position). As a result, the driving efficiency of the driving mechanisms can be enhanced in the expanding and contracting directions, and at the same time the width of the entire device can be designed compact.

The present invention relates to a control method for a swing device, the swing device comprising:
a swing member on which a user rides;
an operation member for transmitting an operation signal in response to an operation by the user;
processing means for specifying a movement mode of a virtual moving object in a virtual space in response to the operation signal from the operation member;
a fulcrum support mechanism for supporting the swing member at the fulcrum, the fulcrum being placed on a rear side of a riding position of the user of the swing member in the longitudinal direction of the swing member; and
a first driving mechanism for swingably supporting the swing member at a first driving point thereof and driving the first driving point in a vertical direction, the first driving point being spaced apart from the fulcrum in a longitudinal direction of the swing member,
the control method comprising:
operating the first driving mechanism so that a front portion of the swing member rises, in a case where the movement mode of the virtual moving object specified by the processing means indicates rising in the virtual space; and
operating the first driving mechanism so that the front portion of the swing member lowers, in a case where the movement mode of the virtual moving object specified by the processing means indicates lowering in the virtual space (eighth aspect).

In the eighth aspect of the present invention, the user can recognize the movement mode of the moving object determined by the processing means based on the operation that the user performs by himself/herself. Accordingly, the effect similar to that of the fifth aspect of the present invention can be attained.

The present invention relates to a control method for a swing device,
the swing device comprising:
a swing member on which a user rides;
a display device placed on a front side of a riding position of the user in the longitudinal direction of the swing member, for displaying one of a video image of a virtual moving object moving in a virtual space and a video image drawn from a virtual viewpoint moving in the virtual space;
a fulcrum support mechanism for supporting the swing member at a fulcrum, the fulcrum being placed on a rear side of the riding position of the user of the swing member in the longitudinal direction of the swing member; and
a first driving mechanism for swingably supporting the swing member at a first driving point thereof and moving the first driving point in a vertical direction, the first driving point being spaced apart from the fulcrum in a longitudinal direction of the swing member,
the control method comprising:
operating the first driving mechanism so that a front portion of the swing member rises, in a case where one of the virtual moving object and the virtual viewpoint rises in the virtual space; and
operating the first driving mechanism so that the front portion of the swing member lowers, in a case where one of the virtual moving object and the virtual viewpoint lowers in the virtual space (ninth aspect).

In the ninth aspect of the present invention, the user can recognize the movement mode of the moving object or the virtual viewpoint based on the video image displayed on the display device. Accordingly, the effect similar to that of the sixth aspect of the present invention can be attained.

Note that, the eighth and ninth aspects of the present invention may include additional structures like in the second to seventh aspects of the present invention, in which a swing member further including a second driving mechanism for driving a second driving point spaced apart from a fulcrum in the longitudinal direction and spaced apart from the first driving point in the lateral direction is used, or the first and second driving mechanisms are operated so that a front portion of the swing member rises or lowers according to the rising or the lowering of the virtual moving object or the virtual viewpoint.

### BRIEF DESCRIPTION OF THE DRAWINGS

In the accompanying drawings:
FIG. 1A is an explanatory view illustrating a structure of an exemplified swing game machine;
FIG. 1B is an explanatory view illustrating the structure of the exemplified swing game machine;
FIG. 2A is an explanatory view illustrating a driving manner of a swing member of a swing game machine of a conventional structure;
FIG. 2B is an explanatory view illustrating a driving manner of a swing member of a swing game machine of a structure of the present invention;
FIG. 2C is an explanatory view illustrating a driving manner of the swing member of a swing game machine of the structure of the present invention;
FIG. 3 is a perspective view illustrating an outer structure of a swing game machine according to an embodiment of the present invention;
FIG. 4A is a perspective view illustrating a structure of the swing game machine according to the embodiment of the present invention;
FIG. 4B is a side view illustrating the structure of the swing game machine according to the embodiment of the present invention;
FIG. 4C is a front view illustrating the structure of the swing game machine according to the embodiment of the present invention;
FIG. 4D is a rear view illustrating the structure of the swing game machine according to the embodiment of the present invention;
FIG. 5A is an explanatory view illustrating a structure of a fulcrum support mechanism;
FIG. 5B is an explanatory view illustrating a structure of a universal joint;
FIG. 5C is an explanatory view illustrating a structure of an electric linear actuator;
FIG. 6 is a block diagram illustrating a control unit of the swing game machine according to the embodiment of the present invention;
FIG. 7 is a flowchart illustrating contents of processing executed in the swing game machine according to the embodiment of the present invention;
FIG. 8A is an explanatory view illustrating a tilt mode of a swing member in a case where a moving object is raised;
FIG. 8B is an explanatory view illustrating a tilt mode of the swing member in a case where the moving object is lowered;
FIG. 8C is an explanatory view illustrating a tilt mode of the swing member in a case where the moving object is turned right; and
FIG. 8D is an explanatory view illustrating a tilt mode of the swing member in a case where the moving object is turned left.

### DETAILED DESCRIPTION OF THE PREFERRED EMBODIMENT

Hereinafter, an embodiment of the present invention will be explained referring to a body-sensible swing game machine 1 as an example in which a movement mode of a virtual moving object M (e.g., fighter aircraft) in a virtual space is determined based on an operation with respect to an operation member and the determined movement mode is displayed on a display device.

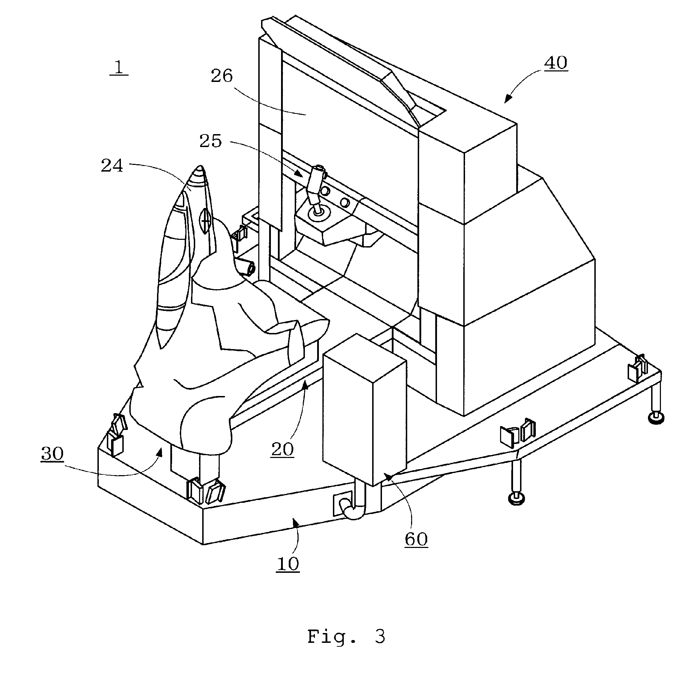

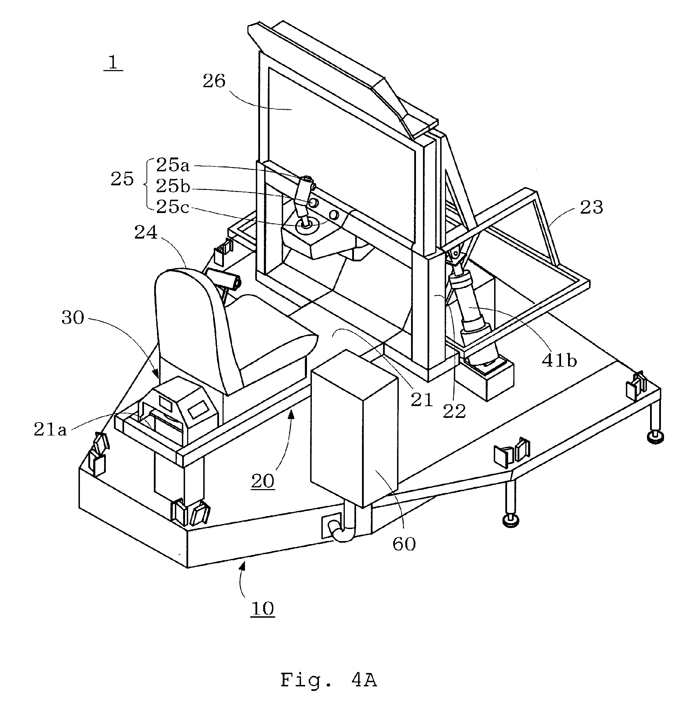

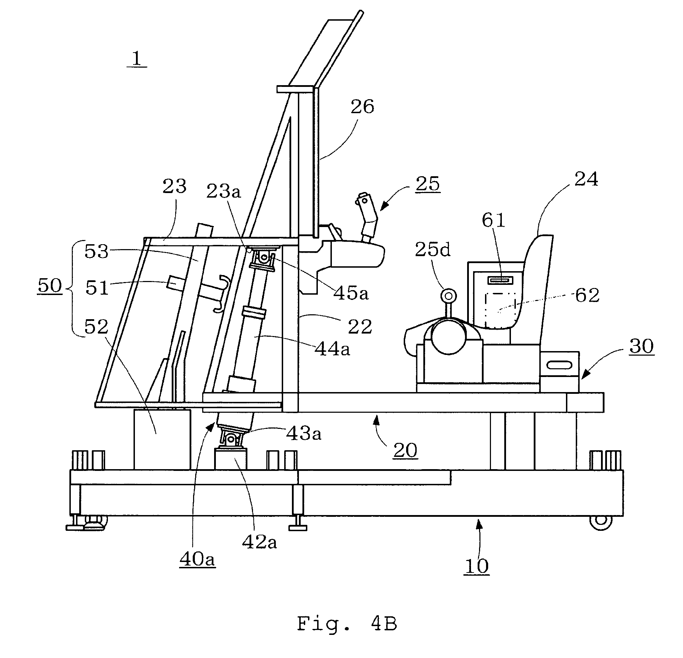

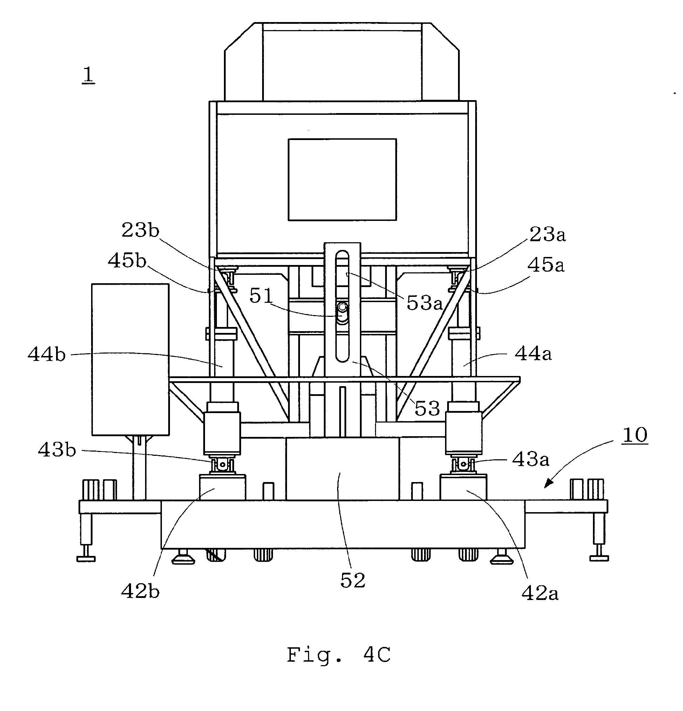

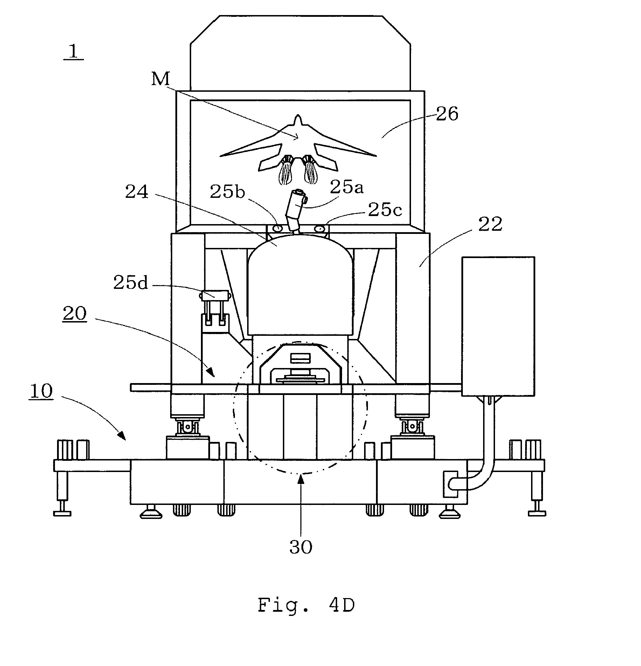

FIG. 3 is a perspective view illustrating an outer structure of the swing game machine 1 to which a swing device of the present invention is applied, and FIGS. 4A to 4D are perspective, side, front, and rear views, respectively, illustrating the swing game machine 1 from which a casing frame is removed.

As shown in the figures, the swing game machine 1 mainly includes a base stage 10, a swing member 20, a fulcrum support mechanism 30, a driving mechanism storing unit 40, and a money processing machine 60.

Of those, the base stage 10 serves as a seating to which the fulcrum support mechanism 30, a first driving mechanism 41a, a second driving mechanism 41b, a static determinate maintaining mechanism 50, and so on to be described later are provided. In an inner space of the base stage 10, a control unit 80 for controlling an operation of the game machine 1, various connection cables, and the like can be stored.

Note that the base stage 10 is unnecessary in a case where the fulcrum support mechanism 30, the first driving mechanism 41a, the second driving mechanism 41b, the static determinate maintaining mechanism 50, and the like are directly installed on a floor surface of a facility in which the game machine 1 is installed.

The swing member 20 includes a floor member 21 extending in a longitudinal direction, a mounting stage 22 provided to a front portion of the floor member 21, a reinforcing frame 23, and so on. On the floor member 21, a seat 24 having a shape similar to a cockpit of a fighter aircraft is provided. To the mounting stage 22, an operation panel 25 for receiving from a user various game operations is provided and a display device 26 supported by the reinforcing frame 23 are provided.

The operation panel 25 includes a steering rod 25a being an operation member with which the user instructs a movement direction and the like of the moving object M. By operating the steering rod 25a in forward and backward directions, the moving object M can be raised and lowered, and by operating the steering rod 25a in left and right directions, the moving object M can be turned left and right. The operation panel 25 further includes operation members 25b and 25c with which a game is started, items of the game are selected, and other operations are performed. Further, an auxiliary operation member 25d is arranged at a side of the seat 24.

The display device 26 displays a video image showing a movement mode of the moving object M in the virtual space, which is operated by the user. The video image can be an arbitrary video image with which the user can recognize the movement mode of the moving object M. Examples thereof includes a video image of the moving object M observed from a viewpoint fixed in the virtual space, and a video image of the moving object M observed from a viewpoint inside or behind the moving object M, which is movable in the virtual space together with the moving object M while maintaining a predetermined positional relation therewith.

As the display device 26, a liquid crystal monitor, which is highly resistant to vibration compared to other display devices such as a CRT, is preferably used. As the liquid crystal monitor is light in weight, the display device 26 having a large screen size as shown in the figures can be used. Therefore, a game image with a visual impact can be displayed.

The swing member 20 is supported by a mechanism to be described later in such a manner that the swing member 20 is spaced apart from the base stage 10 by a predetermined distance so as to enable the swing member 20 to perform movements including rolling and pitching.

The fulcrum support mechanism 30 is arranged at a position spaced apart from the seat 24 being a riding position of the user of the swing member 20 by a predetermined distance therebehind.

FIG. 5A is an enlarged sectional view illustrating the fulcrum support mechanism 30.

As shown in the figure, the fulcrum support mechanism 30 includes: a support column 31 having a square pole shape and projecting upright on the base stage 10; a boll joint 32 fixed to an upper end of the support column 31; a fixation block 33 provided to the floor member 21 so as to cover an opening 21a defined in the floor member 21, and having a square-C-shaped space for storing the ball joint 32 therein; and a cover 34 for covering an upper portion of the fixation block 33.

The ball joint 32 includes: a shaft bearing member 32a having a sphere-shaped space defined therein; a ball portion 32b rotatably received and held in the sphere-shaped space; and a ball shaft 32c having an end to which the ball portion 32b is attached. The other end of the ball shaft 32c is inserted and fixed to an insertion hole 33a defined in a ceiling of the fixation block 33 with a nut or the like.

Accordingly, the swing member 20 is swingably supported on the support column 31 so that the ball portion 32b of the ball joint 32 serves as an unmovable fulcrum.

In the driving mechanism storing unit 40 located in a front portion of the game machine 1, the first driving mechanism 41a, the second driving mechanism 41b, and the static determinate maintaining mechanism 50 are stored.

The first and second driving mechanism 41b, 41b include: support stages 42a and 42b provided on left and right portions of an upper front portion of the base stage 10; universal joints 43a and 43b provided at the upper ends of the support stages 42a and 42b; electric linear actuators 44a and 44b provided to the universal joints 43a and 43b; and universal joints 45a and 45b provided to the tip ends of operation rods of the electric linear actuators 44a and 44b, respectively. The universal joints 45a and 45b support the swing member 20 at pads 23a and 23b fixed to mounting bases of the reinforcing frame 23, which is mounted to the mounting stage 22.

Note that the distance from the pad 23a to the ball portion 32b of the ball joint 32 being the fulcrum of the swing member 20 is the same as the distance from the pad 23b to the ball portion 32b. Further, the support stages 42a and 42b are provided so that the axial directions of the electric linear actuators 44a and 44b in a stand-by state are substantially orthogonal to the lines connecting the ball portion 32b being the fulcrum of the swing member 20 and the pads 23a and 23b, respectively.

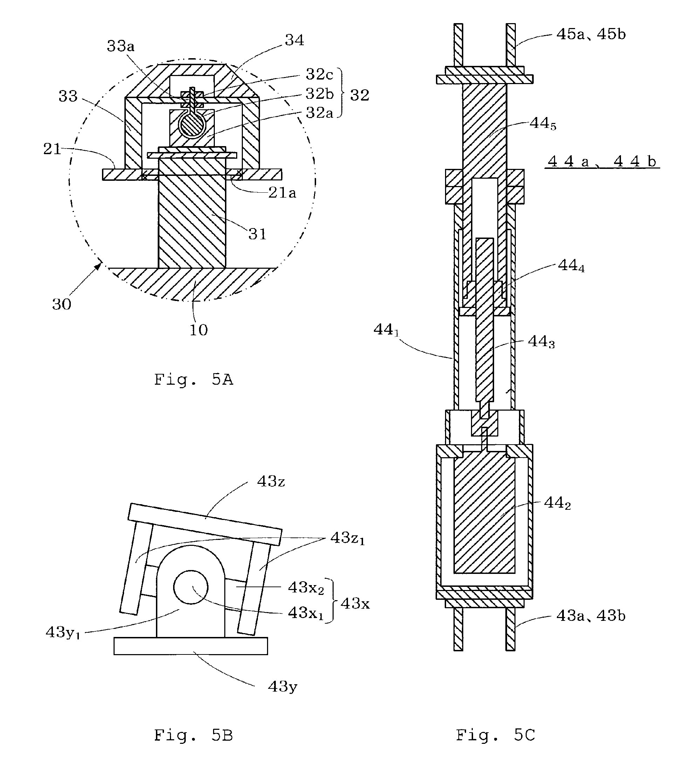

Herein, the universal joints 43a, 43b, 45a, and 45b are similarly structured, and an enlarged explanatory view illustrating the structure thereof is shown in FIG. 5B.

As shown in the figure, each of the universal joints 43a, 43b, 45a, and 45b includes: a cross shaft 43x having two shaft members 43x₁ and 43x₂ orthogonally crossed and fixed to each other; a lower plate 43y having on an upper surface thereof a pair of shaft bearing portions 43y₁ for rotatably supporting both ends of one shaft member 43 x₁; and an upper plate 43z having on a lower surface thereof a pair of shaft bearing portions 43z₁ for rotatably supporting both ends of the other shaft member 43 x₂. Thus, a member provided to an upper surface of the upper plate 43z is swingably supported with respect to a member provided to a lower surface of the lower plate 43y.

FIG. 5C is an explanatory view illustrating a structure of the electric linear actuators 44a and 44b.

As shown in the figure, each of the electric linear actuators 44a and 44b mainly includes in a cylinder-shaped casing 44₁; a servo motor 44₂; a boll screw shaft 44₃ rotationally driven by the servo motor 44₂; a ball circulation nut 44₄ screwed by the boll screw shaft 44₃ and prohibited to rotate together with the boll screw shaft 44₃; and an operation rod 44₅ integrally fixed to the ball circulation nut 44₄. The ball circulation nut 44₄ converts a rotational movement of the boll screw shaft 44₃ by the servo motor 44₂ into a liner movement, thereby driving the operation rod 44₅ forward and backward in the shaft direction thereof.

Accordingly, the swing member 20 is swingably supported by the universal joints 45a and 45b via the pads 23a and 23b being driving points, and is driven so as to be vertically moved by the forward and backward movement of the operation rod 44₅ of the electric linear actuators 44a and 44b.

The static determinate maintaining mechanism 50 includes: a support shaft 51 projectingly provided to the reinforcing frame 23 at a midst position between the pads 23a and 23b being the driving points of the swing member 20; a support stage 52 provided on a front portion of an upper surface of the base stage 10 and a guide frame 53 provided on the upper surface of the support stage 52 with a predetermined slant angle and having a guide hole 53a, in which the support shaft 51 is rotatably inserted, for guiding the support shaft 51 only in the vertical direction.

Herein, the support shaft 51 is provided in such a manner that an axial center thereof directs the ball portion 32b being the fulcrum of the swing member 20. The support shaft 51 is guided by the guide hole 53a, whereby the degree of freedom of the movement of the swing member 20 is limited to the vertical movement along the guide hole 53a of the support shaft 51 (pitching), and the rotational movement of the swing member 20 about the support shaft 51 (rolling). Thus, static determinate of the swing member 20 is prevented from being lost while the swing member 20 is driven by the electric linear actuators 44a and 44b,.

The money processing machine 60 includes: a coin insertion opening 61 defined in an outer surface of the casing, for receiving a game fee; and a coin processing unit 62 provided inside the casing, for detecting an inserted coin and transmitting a coin detection signal to the control unit 80.

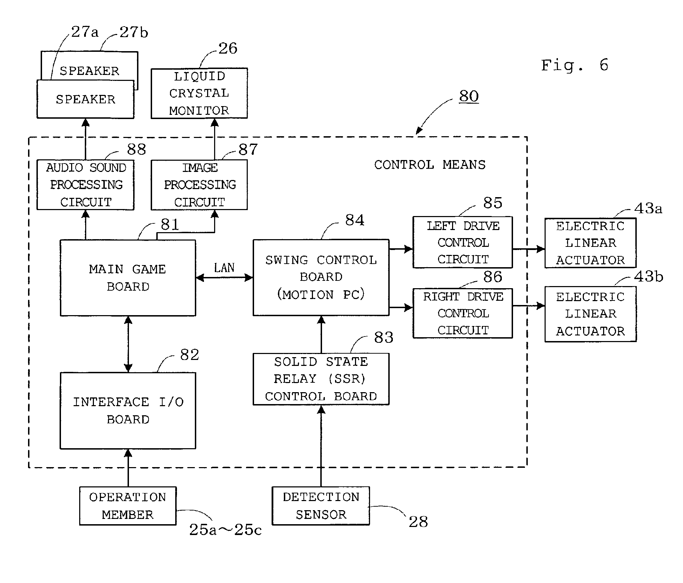

FIG. 6 is a block diagram illustrating a configuration of the control unit 80 of the swing game machine 1.

As shown in the figure, the control unit 80 includes a main game board 81, an interface I/O board (JVS I/O BD) 82, a solid state relay (SSR) control board (relay BD) 83, a swing control board (MOTION PC) 84, a left drive control circuit 85, a right drive control circuit 86, an image processing circuit 87, and an audio sound processing circuit 88.

Herein, the main game board 81 includes a CPU, ROM, RAM, and the like and integrally controls the operation of the game machine 1. To be specific, the CPU expands a game program and a system program stored in the ROM in advance on the RAM, performs computing according to an operation signal input from the various operation members 25a to 25d via the interface I/O board 82 to compute movement mode and the position of the moving object M in the virtual space momentarily, and transmits a tilt angle instruction signal for instructing a pitching angle and a rolling angle of the swing member 20 to the swing control board 84 based on a result of the computation. Further, the main game board 81 generates a drawing command and an audio sound command as tasks for drawing a performance image and outputting a performance audio sound, and transmits the commands to the image processing circuit 87 and the audio sound processing circuit 88, respectively.

The solid state relay control board 83 generates a safety signal for instructing to suspend the movement of the electric linear actuators 44a and 44b in response to a signal from a detection sensor 28 provided in the vicinity of the game machine 1, and transmits the signal to the swing control board 84. Examples of the detection sensor 28 includes a mechanical sensor for detecting a seatbelt wearing state at the seat 24 and an optical sensor for detecting that a person is approaching a dangerous portion of the game machine 1.

The swing control board 84 includes a CPU, ROM, RAM, and the like for processing the driving of the swing member 20, and controls the driving of the electric linear actuators 44a and 44b according to a swing control program expanded from the ROM onto the RAM and in response to the signals from the main game board 81 and the solid state relay control board 83.

To be specific, the swing control board 84 determines a rotational direction and a rotational rate of the servo motor 44₂ in the electric linear actuators 44a and 44b in response to the tilt angle instruction signal from the main game board 81, and transmits a driving signal for instructing the rotational direction and the rotational rate to the left and right drive control circuits 85 and 86. Further, in a case of receiving the safety signal indicating that a seatbelt is not worn, a person is approaching a dangerous portion, or the like, the transmittance of the driving signal to the left and right drive control circuits 85 and 86 is suspended.

The left and right drive control circuits 85 and 86 control the rotation of the servo motors 44₂ in the electric linear actuators 44a and 44b in response to the driving signal from the interface I/O board 82, thereby controlling the pitching and the rolling of the swing member 20.

The image processing circuit 87 performs a drawing processing of the game image in response to the drawing command from the main game board 81, which is displayed on the display device 26. The audio sound processing circuit 88 causes, for example, left and right speakers 27a and 27b embedded in a backrest of the seat 24 to output a game audio sound synthesized based on the audio sound command from the main game board 81.

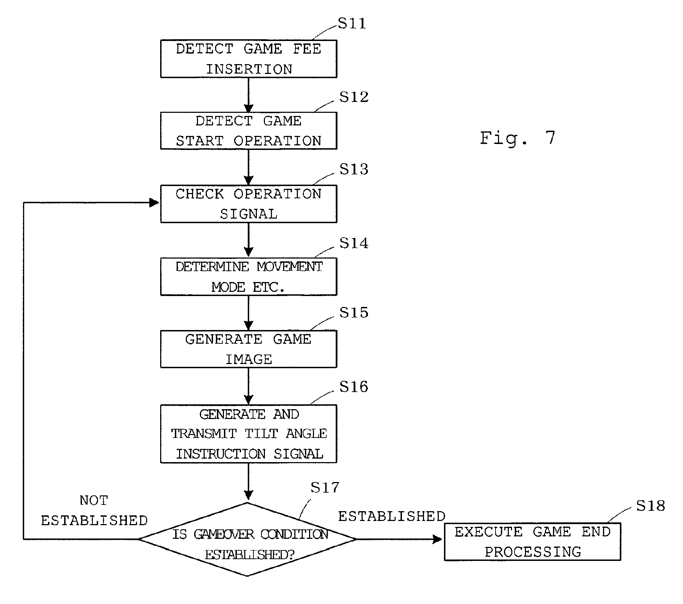

FIG. 7 is a flowchart illustrating an outline of processing executed in the main game board 81.

As shown in the figure, when the money processing machine 60 receives the detection signal indicating insertion of a predetermined game fee (Step S11), the main game board 81 starts game processing (Steps S13 to S17), on receiving a game start operation with respect to the operation member 25b or 25c or the like (Step S12).

In the game processing, the following processing is executed in every frame-times.

That is, the main game board 81 checks presence/absence of an operation signal from the steering rod 25a (Step S13), and according to the presence/absence and the content of the signal, determines the movement mode and the position of the moving object M in the virtual space (Step S14).

Next, the main game board 81 places the moving object M at the position determined in Step S14 in the virtual space in which various objects are arranged to construct a virtual model, and generates a game image as if the image is drawn from a virtual viewpoint located at the predetermined position (e.g., behind the moving object M) (Step S15). Further, the main game board 81 generates the tilt angle instruction signal based on the attitude, the movement mode and the like of the moving object M obtained in Step S14, and transmits the signal to the swing control board 84 (Step S16).

Then, in Step S17, whether or not the predetermined gameover condition is established is detected. In a case of being established, the game end processing is executed (Step S18), and in a case of being unestablished, the processing is returned to Step 13 in order to execute the game processing in the subsequent frame-time.

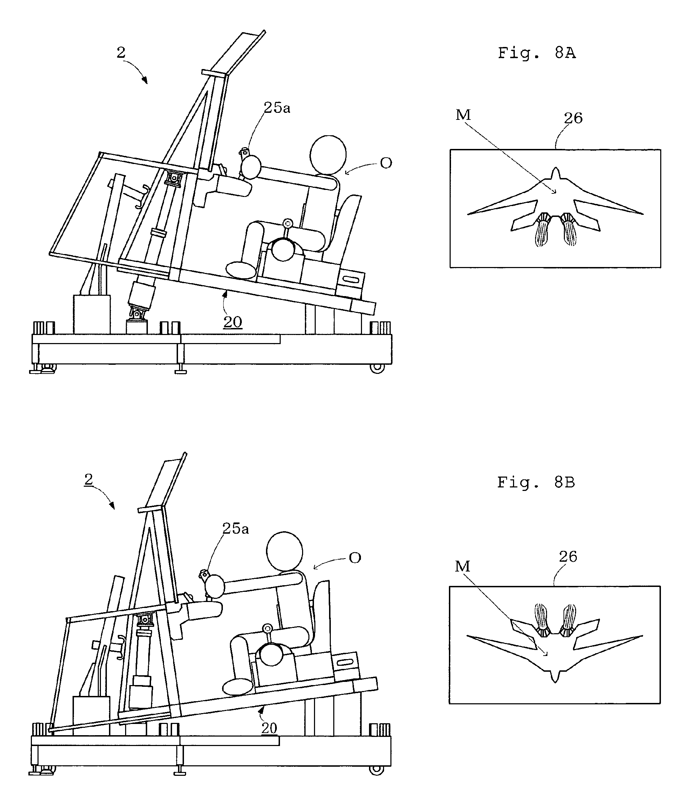

FIGS. 8A to 8D are explanatory views illustrating the various swing modes of the swing member 20 while the game is in progress.

FIG. 8A illustrates a swing mode in a case where a raising operation is performed with respect to the steering rod 25a. In this case, the operation rods 44₅ of the electric linear actuators 44a and 44b extend with an identical feeding amount to thereby drive upward the pads 23a and 23b being the driving points. As a result, the swing member 20 tilts in a direction in which a user O faces upward, and at the same time, a vertical position of the user O is heightened. Accordingly, due to the change of the posture and the height, the user O can sense a rising feeling extremely impressively. Further, as a video image showing that the moving object M is rising is displayed on the display device 26, the reality of the rising feeling of the user O can further be enhanced.

FIG. 8B illustrates a swing mode in a case where a lowering operation is performed with respect to the steering rod 25a. In this case, the operation rods 44₅ of the electric linear actuators 44a and 44b contract with an identical feeding amount to thereby drive downward the pads 23a and 23b being the driving points. As a result, the swing member 20 tilts in a direction in which a user O faces downward, and at the same time, the vertical position of the user O is lowered. Accordingly, due to the change of the posture and the height, the user O can sense a lowering feeling extremely impressively. Further, as a video image showing that the moving object M is lowering is displayed on the display device 26, the reality of the lowering feeling of the user O can further be enhanced.

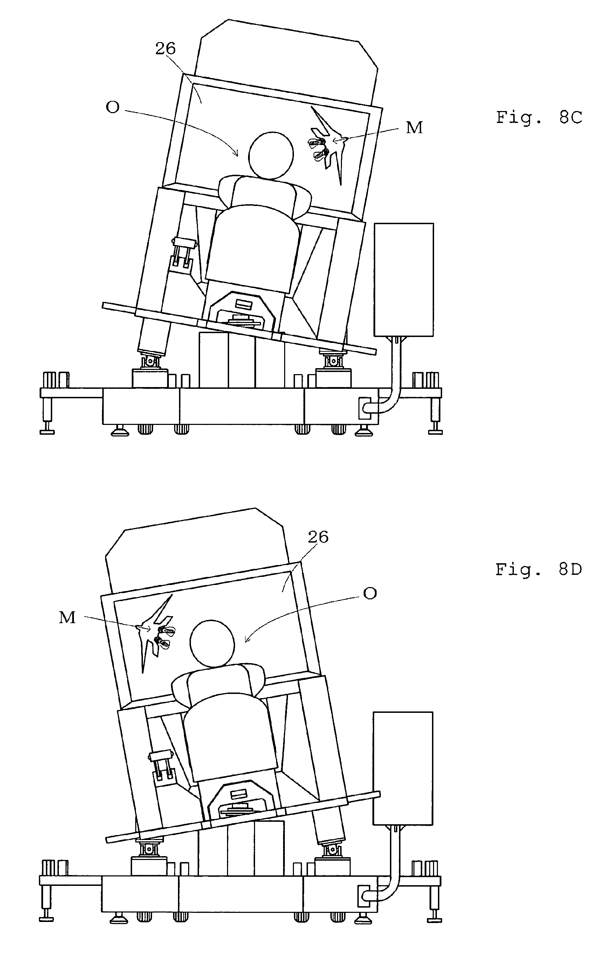

Each of FIGS. 8C and 8D illustrates a swing mode in a case where a right-turning operation or a left-turning operation is performed with respect to the steering rod 25a. In these cases, each of the operation rods 44₅ of the electric linear actuators 44a and 44b extends or contracts in such a manner that the heights of the pads 23a and 23b are made different to each other. As a result, the swing member 20 is tilted right or left to make the user O sense a right-turning feeling or a left-turning feeling. Further, at the same time, as a video image showing that the moving object M is turning right or left is displayed on the display device 26, the reality of the turning feeling of the user O can further be heightened.

Note that, in a case where the operation rod 44₅ of one of the electric linear actuators 44a and 44b is extended by a predetermined amount and the operation rod 44₅ of the other of the electric linear actuators 44a and 44b is maintained at a neutral position, the swing member 20 tilts right or left (rolling) and at the same time tilts in the direction in which the user O faces upward (pitching). Accordingly, the user O can sense a combined feeling of a turning feeling and a rising feeling. Likewise, in a case where the operation rod 44₅ of one of the electric linear actuators 44a and 44b is contracted by a predetermined amount and the operation rod 44₅ of the other of the electric linear actuators 44a and 44b is maintained at the neutral position, the swing member 20 tilts right or left (rolling) and at the same time tilts in the direction in which the user O faces downward (pitching). Accordingly, the user O can sense a combined feeling of a turning feeling and a lowering feeling. As such, the tilt of the swing member 20 can be changed in the various modes.

The present invention has been explained by way of the exemplified embodiment. However, the present invention is not limited to the above-mentioned embodiment of the present invention, and various modifications and alterations can be made within the scope of the claims.

For example, in the above-mentioned embodiment of the present invention, description has been made by way of an example in which the left and right driving points 23a and 23b and the driving mechanisms 41a and 41b are provided to the front side of the ball portion 32b. However, the driving points 23a and 23b and the driving mechanisms 41a and 41b may be provided to the rear side of the ball portion 32b. In this case, for example, when a raising operation is performed with respect to the steering rod 25a, the driving points 23a and 23b are driven downward, and when a lowering operation is performed with respect to the steering rod 25a, the driving points 23a and 23b are driven upward. As such, a swing game machine operating in a similar manner to that of the above-mentioned embodiment of the present invention can be realized except that the driving direction of the driving points are different from that of the above-mentioned embodiment of the present invention.

Further, in the above-mentioned embodiment of the present invention, by adjusting the distance between the seat 24 being the riding position of the user and the ball portion 32b, the distances between the ball portion 32b and the driving points 23a and 23b, the distance between the driving points 23a and 23b, and the like, the degree of the change of the tilt angle of the swing member 20 by extending or contracting the operation rods 44₅ of the driving mechanisms 41a and 41b by the same amount, the distance that the user moves in vertical direction by the tilt of the pitching of the swing member 20 by the same angle, and the like can be adjusted.

Further, in the above-mentioned embodiment of the present invention, description has been made by way of an example in which the electric linear actuators 44a and 44b are employed in the driving mechanisms. However, any arbitrary means can be used to vertically drive the driving points 23a and 23b. For example, the driving points 23a and 23b can be driven in a similar manner to that of the above-mentioned embodiment of the present invention by employing another mechanism such as an oil hydraulic cylinder. Alternatively, the driving points 23a and 23b can be hung from an upper position of the game machine 1 and driven by towing or the like.

In addition, the shape, the dimension, and the like of the respective members constituting the swing game machine of the above-mentioned embodiment of the present invention are merely described as examples. Any alternative shape and dimension can be employed to implement the present invention.

## Claims

1. A swing device (1), **characterized in that** the swing device (1) comprises:
a swing member (2) on which a user (O) rides;
a fulcrum support mechanism (30) for swingably supporting the swing member (2) at a fulcrum (32b); and
a first driving mechanism (41a) for swingably supporting the swing member (2) at a first driving point (23a) thereof and driving the first driving point (23a) in a vertical direction, the first driving point (23a) being spaced apart from the fulcrum (32b) in a longitudinal direction of the swing member (20),
and **in that** the fulcrum (32b) is placed on a rear side of a riding position (24) of the user (O) in the longitudinal direction of the swing member (20).

2. A swing device (1) according to claim 1, **characterized in that** the swing device (1) further comprises:
a second driving mechanism (41b) for swingably supporting the swing member (2) at a second driving point (23b) thereof and driving the second driving point (23b) in a vertical direction independently from the first driving mechanism (41a), the second driving point (23b) being spaced apart from the fulcrum (32b) in a longitudinal direction of the swing member (20), and being spaced apart from the first driving point (23a) in a lateral direction of the swing member.

3. A swing device (1) according to claim 2, **characterized in that** the swing device (1) further comprises:
a support shaft (51) projecting between the first driving point (23a) and the second driving point (23b); and
static determinate maintaining means (53) having a guide hole (53a) defined therein through which the support shaft (51) is rotatably inserted, for regulating movement of the support shaft (51) in the lateral direction of the swing member (20), and guiding the support shaft (51) in the vertical direction.

4. A swing device (1) according to any one of claim 1 to 3, **characterized in that** the first driving point (23a) is placed on a front side of the riding position (24) of the user (0) in the longitudinal direction of the swing member (20).

5. A swing device according to any one of claims 1 to 4, **characterized in that** the swing device (1) further comprises:
an operation member (25) for transmitting an operation signal according to an operation by the user (O); and
processing means (80) for specifying a movement mode of a virtual moving object (M) in a virtual space in response to the operation signal from the operation member (25), and **in that**:
the first driving mechanism (41a) drives the first driving point (23a) according to the movement mode of the virtual moving object (M) specified by the processing means (80).

6. A swing device according to any one of claims 1 to 5, **characterized in that** the swing device (1) further comprises: a display device (26) placed on a front side of the riding position (24) of the user (O) in the longitudinal direction of the swing member (20), for displaying one of a video image of a virtual moving object (M) moving in a virtual space and a video image of a virtual space drawn from a virtual viewpoint moving in the virtual space, and **in that**:
the first driving mechanism (41a) drives the first driving point (23a) according to a movement mode of one of the virtual moving object (M) and the virtual viewpoint.

7. A swing device according to any one of claims 1 to 6, **characterized in that** the first driving mechanism (41a) is placed orthogonal to a line connecting the fulcrum (32b) and the first driving point (23a) while the swing member (20) is placed at a reference position.

8. A control method for a swing device (1), **characterized in that**:
the swing device comprises:
a swing member (29) on which a user (O) rides;
an operation member (25) for transmitting an operation signal in response to an operation by the user (O);
processing means (80) for specifying a movement mode of a virtual moving object (M) in a virtual space in response to the operation signal from the operation member (25);
a fulcrum support mechanism (30) for supporting the swing member (20) at the fulcrum (32b), the fulcrum (32b) being placed on a rear side of a riding position (24) of the user (O) of the swing member (20) in the longitudinal direction of the swing member (20); and
a first driving mechanism (41a) for swingably supporting the swing member (20) at a first driving point (23a) thereof and driving the first driving point (23a) in a vertical direction, the first driving point (23a) being spaced apart from the fulcrum (32b) in a longitudinal direction of the swing member(20),
the control method comprises:
operating the first driving mechanism (41a) so that a front portion of the swing member (20) rises, in a case where the movement mode of the virtual moving object (M) specified by the processing means (80) indicates rising in the virtual space; and
operating the first driving mechanism (41a) so that the front portion of the swing member (20) lowers, in a case where the movement mode of the virtual moving object (M) specified by the processing means (80) indicates lowering in the virtual space.

9. A control method for a swing device (1), **characterized in that**:
the swing device (1) comprises:
a swing member (20) on which a user (O) rides;
a display device (26) placed on a front side of a riding position (24) of the user (O) in the longitudinal direction of the swing member (20), for displaying one of a video image of a virtual moving object (M) moving in a virtual space and a video image drawn from a virtual viewpoint moving in the virtual space;
a fulcrum support mechanism (30) for supporting the swing member (20) at a fulcrum (32b), the fulcrum (32b) being placed on a rear side of the riding position (24) of the user (O) of the swing member (20) in the longitudinal direction of the swing member(20); and
a first driving mechanism (41a) for swingably supporting the swing member (20) at a first driving point (23a) thereof and driving the first driving point (23a) in a vertical direction, the first driving point (23a) being spaced apart from the fulcrum (32b) in a longitudinal direction of the swing member(20),
the control method comprises:
operating the first driving mechanism (41a) so that a front portion of the swing member (20) rises, in a case where one of the virtual moving object (M) and the virtual viewpoint rises in the virtual space; and
operating the first driving mechanism (41a) so that the front portion of the swing member (20) lowers, in a case where one of the virtual moving object (M) and the virtual viewpoint lowers in the virtual space.
